# EUROPÄISCHE PATENTSCHRIFT

(11) **EP 1 079 149 B1**
(45) Veröffentlichungstag und Bekanntmachung des Hinweises auf die Patenterteilung: **21.07.2004**
(21) Anmeldenummer: 00117575.1
(22) Anmeldetag: 16.08.2000
(51) Int. Cl.: F16H 61/00

(54) **Verfahren zur Steuerung eines im Antriebsstrang eines Kraftfahrzeuges angeordneten CVT**
Control method for a cvt applied in a vehicle driveline
Méthode de commande pour cvt utilisée dans l'ensemble de propulsion d'un véhicule automobile

(30) Priorität: 24.08.1999 DE 19940085
(43) Veröffentlichungstag der Anmeldung: 28.02.2001
(73) Patentinhaber: ADAM OPEL AG, 65423 Rüsselsheim (DE)
(72) Erfinder: Kleila, Hans, Dipl.-Ing (FH), 65428 Rüsselsheim (DE); Becker, Gernot, Dipl.-Ing. (FH), 55278 Dexheim (DE)
(74) Vertreter: Daniel, Ulrich W.P.

(56) Entgegenhaltungen:
- DE-A- 19 742 604
- DE-A- 19 802 075
- DE-C- 4 120 552
- US-A- 4 627 311

## Beschreibung

Die Erfindung betrifft ein Verfahren zur Steuerung eines im Antriebsstrang eines Kraftfahrzeuges zwischen einem Antriebsmotor und einer Antriebsachse angeordneten CVT (continuously variable transmission) gemäß dem Oberbegriff des Patentanspruches 1.

Bei CVT, also stufenlosen Automatikgetrieben, wird je nach Fahrerwunsch für das Betriebsverhalten des Kraftfahrzeuges eine verbrauchsoptimierte oder fahrleistungsoptimierte Steuerkurve in einem Motorkennfeld mittels eines Wählhebels oder automatisch ausgewählt. Hierbei ergibt sich jedoch der Nachteil, dass durch die typische Verstellcharakteristik des CVT, nämlich konstante Motordrehzahl beim Beschleunigen, das Fahrverhalten insbesondere durch die akustische Rückkopplung vom Fahrer nicht seinen Wünschen entsprechend empfunden wird. Die festliegende Steuerung des CVT kann auch wechselnden Einflüssen und Fahrbedingungen, wie beispielsweise Steigungen, Gefälle, Gegenwind, eine Anhängelast usw. nicht ausreichend Rechnung tragen.

Um diesem Mangel zu begegnen, wird mit DE 197 42 604 A1 vorgeschlagen, dass vorzugsweise die Soll-Drehzahl des Antriebsmotors in Abhängigkeit von einer Rückmeldefunktion mit einem Sprunganteil als Antwort auf eine Änderung der Stellung des Fahrpedals bestimmt wird, wobei die Rückmeldefunktion über eine seit Änderung der Stellung des Fahrpedals verstrichene Zeit variiert.

Damit kann zwar während eines Beschleunigungsprozesses eine für den Fahrer akzeptable akustische Rückkopplung erzielt werden. Nicht verbessert wird durch eine solche Maßnahme jedoch das Betriebsverhalten des CVT bei konstantem Betrieb des Kraftfahrzeuges, z.B. bei Fahrt mit gleichbleibender Geschwindigkeit, bei der aber durch Fahrbahnunebenheiten, Windeinfluß, wechselndem Rollwiderstand oder dergleichen Störgrößen auftreten, die im Allgemeinen durch kaum wahrnehmbare und vom Fahrer oft unbewusst vorgenommene Veränderungen der Fahrpedalstellung ausgeglichen werden bzw. auszugleichen versucht werden.

Durch derartige Störgrößen und auch durch die daraufhin erfolgenden meist nur geringen Fahrpedaländerungen reagiert das CVT mit Veränderungen des Übersetzungsverhältnisses, um an der vorgegebenen Steuerkurve zu bleiben. Dadurch entsteht ein instabiler Fahrzustand, bei dem die Motordrehzahl um einen Mittelwert schwankt, während gleichzeitig das CVT diese Schwankungen durch Veränderung des Übersetzungsverhältnisses kompensiert. Beim Fahrer ruft dieser Zustand im Allgemeinen ein beunruhigendes Gefühl hervor.

Der Erfindung liegt die Aufgabe zu Grunde, ein Verfahren zur Steuerung eines im Antriebsstrang eines Kraftfahrzeuges angeordneten CVT so zu verbessern, dass die bei konstantem Fahrzustand des Kraftfahrzeuges auftretenden vorbeschriebenen Unzulänglichkeiten beseitigt werden.

Die Erfindung löst diese Aufgabe mit den kennzeichnenden Merkmalen des Patentanspruches 1.

Vorteilhafte Weiterbildungen der Erfindung sind Gegenstand der Unteransprüche.

Die Erfindung ist nachstehend näher beschrieben, wobei ein Flussdiagramm die wesentlichen Zusammenhänge verdeutlicht.

Wenn bei der Fahrt eines Kraftfahrzeuges mit annähernd konstanter Geschwindigkeit eine geringe Erhöhung oder Verringerung des Fahrwiderstandes auftritt, dann kann diese Fahrwiderstandsänderung vom Fahrer durch Veränderung der Fahrpedalstellung und damit durch Veränderung der motorischen Vortriebskraft ausgeglichen werden. Solange diese Veränderung der Fahrpedalstellung unterhalb eines vorgegebenen Wertes a bleibt (vergleiche Kasten 1), wird die Steuerung des CVT das Übersetzungsverhältnis nicht ändern. Übersteigt die Veränderung der Fahrpedalstellung den Wert a, weil nur so eine annähernd konstante Geschwindigkeit beibehalten werden kann, dann wird gemäß Kasten 2 geprüft, ob die aktuelle Fahrgeschwindigkeit S innerhalb eines festgelegten Geschwindigkeitsbereiches von S1 bis S2 um S bleibt. Ist dies der Fall, dann wird weiterhin eine Änderung des Übersetzungsverhältnisses am CVT unterdrückt, und das Übersetzungsverhältnis bleibt konstant (Kasten 3). Erst wenn die Geschwindigkeitsänderung aus dem kalibrierten Fahrgeschwindigkeitsbereich S1<S<S2 heraustritt, wird am CVT eine Übersetzungsänderung initiiert, so wie mit Kasten 4 dargestellt.

Damit wird es möglich, auch mit einem CVT eine Fahrt mit konstanter Geschwindigkeit mit ruhigem Fahrverhalten durchzuführen. Der Fahrer erhält in dieser Fahrphase das akustisch wahrnehmbare Drehzahlsignal kleiner Geschwindigkeitsänderungen. Diese kann er in üblicher Weise bewusst oder unbewusst durch Gaspedaländerungen ausgleichen. Bei einer Ausrüstung des Fahrzeuges mit einem Tempomat werden sich keine unruhigen Fahrzustände einstellen, bei denen das CVT seine Übersetzung ständig um eine Mittellage schweben lässt.

Es kann für das Fahrverhalten des Kraftfahrzeuges vorteilhaft sein, wenn der kalibrierte Bereich der Fahrgeschwindigkeit S1<S<S2 in Abhängigkeit von der aktuellen Fahrgeschwindigkeit S variabel ist, in dem z.B. bei geringer aktueller Fahrgeschwindigkeit S dieser Bereich kleiner ist, als bei größerer aktueller Fahrgeschwindigkeit. Es kann dadurch das Ansprechverhalten des Fahrzeuges auf Fahrpedalbewegungen zusätzlich abgestimmt werden. Die unterschiedliche Größe des kalibrierten Bereiches S1<S<S2 in Abhängigkeit von der aktuellen Fahrgeschwindigkeit S kann in einem Speicher der elektronischen Steuerung des CVT abgelegt sein.

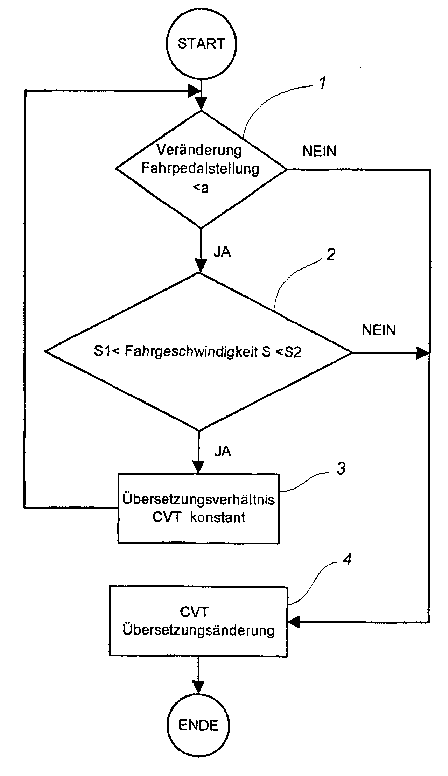

## Patentansprüche

1. Verfahren zur Steuerung eines im Antriebsstrang eines Kraftfahrzeuges zwischen einem Antriebsmotor und einer Antriebsachse angeordneten CVT (continuously variable transmission) mit einer angetriebenen Primärscheibe und einer Sekundärscheibe, von denen zumindest eine in ihrem wirksamen Durchmesser veränderbar ist und die gemeinsam von einem Umschlingungsorgan zur Übertragung eines Drehmomentes umfangen sind, wobei ein elektronisches Steuergerät Drehzahlsignale der Primärscheibe und der Sekundärscheibe erfasst und überwacht und Aktuatoren zum Verstellen der wirksamen Durchmesser von Primärund/oder Sekundärscheibe und damit der Übersetzung des CVT in Abhängigkeit von diesen Drehzahlen und von zumindest der Stellung eines Fahrpedals ansteuert, **gekennzeichnet durch** folgende Schritte:
- Bei Veränderung der Fahrpedalstellung wird geprüft, ob diese Veränderung innerhalb eines für das Fahrverhalten relevanten Wertes (a) oder darüberliegt (1), wobei nur bei einem darüberliegenden Wert zugleich in üblicher Weise in die Regelung der Übersetzung des CVT in Form einer Übersetzungsänderung (4) eingegriffen wird;
- wenn festgestellt wird, dass die Veränderung der Fahrpedalstellung unterhalb eines für die Fahrdynamik relevanten Wertes (a) liegt, wird geprüft, ob sich die Fahrgeschwindigkeit (S) über einen kalibrierten Bereich um die aktuelle Fahrgeschwindigkeit hinaus verändert oder innerhalb dieses kalibrierten Bereiches (S1<S<S2) verbleibt (2), wobei nur bei Erkennen einer Fahrgeschwindigkeitsänderung aus dem kalibrierten Bereich (S1<S<S2) heraus sogleich und in üblicher Weise in die Regelung der Übersetzung in Form einer Übersetzungsänderung (4) des CVT eingegriffen wird;
- ist festgestellt, dass die Änderung der Fahrgeschwindigkeit innerhalb des kalibrierten Bereiches (S1<S<S2) verbleibt, wird nicht in die Regelung des CVT in Form einer Übersetzungsänderung eingegriffen, das bestehende Übersetzungsverhältnis bleibt konstant (3).

2. Verfahren nach Anspruch 1, **dadurch gekennzeichnet, dass** der kalibrierte Bereich (S1<S<S2) in Abhängigkeit von der aktuellen Fahrgeschwindigkeit (S) unterschiedlich groß ist.

3. Verfahren nach Anspruch 1 und 2, **dadurch gekennzeichnet, dass** der kalibrierte Bereich (S1<S<S2) mit zunehmender Fahrgeschwindigkeit (S) größer wird.

## Revendications

1. Procédé de commande d'une transmission à variation continue (CVT), agencée dans la ligne de transmission d'un véhicule automobile, entre un moteur d'entraînement et un essieu d'entraînement, comprenant un disque primaire entraîné et un disque secondaire, parmi lesquels au moins un est variable dans son diamètre actif et lesquels sont entourés conjointement par un organe d'enroulement destiné à transmettre un couple de rotation, dans lequel procédé un dispositif de commande électronique capte et surveille des signaux de vitesse de rotation du disque primaire et du disque secondaire et commande des actuateurs en vue de régler le diamètre actif du disque primaire et/ou du disque secondaire et, de ce fait, le changement du rapport de transmission de la CVT en fonction de ces vitesses de rotation et, d'au moins la position d'une pédale d'accélérateur, **caractérisé par** les étapes suivantes :
- en cas de variation de la position de la pédale d'accélérateur, il est effectué un contrôle pour déterminer si cette variation se situe à l'intérieur d'une valeur (a) significative pour le comportement de conduite ou est supérieure (1) à celle-ci, une intervention étant effectuée dans le réglage du rapport de transmission de la CVT sous la forme d'un changement du rapport de transmission (4) uniquement si la valeur de variation est supérieure à ladite valeur ;
- s'il est constaté que la variation de la position de la pédale d'accélérateur se situe en dessous d'une valeur (a) significative pour la dynamique de conduite, il est effectué un contrôle pour déterminer si la vitesse du véhicule (S) varie au-delà d'une plage calibrée autour de la vitesse actuelle du véhicule ou si elle reste dans cette plage calibrée (S1<S<S2), une intervention étant effectuée immédiatement et de manière habituelle dans le réglage du rapport de transmission de la CVT sous la forme d'un changement du rapport de transmission (4), uniquement en présence d'une variation de la vitesse du véhicule hors de la plage calibrée (S1<S<S2) ;
- s'il est constaté que la variation de la vitesse du véhicule reste à l'intérieur de la plage calibrée (S1<S<S2), il n'y a pas d'intervention dans le réglage de la CVT sous la forme d'un changement du rapport de transmission, le rapport de transmission existant reste constant (3).

2. Procédé selon la revendication 1, **caractérisé en ce que** la plage calibrée (S1<S<S2) est d'une taille différente en fonction de la vitesse actuelle (S) du véhicule.

3. Procédé selon la revendication 1 et 2, **caractérisé en ce que** la plage calibrée (S1<S<S2) s'agrandit lorsque la vitesse du véhicule (S) augmente.

## Claims

1. Method for the control of a CVT (continuously variable transmission) arranged in the drive train of a motor vehicle between a drive engine and a drive axle and having a driven primary pulley and a secondary pulley, of which at least one is variable in its effective diameter and which are together wrapped by a wrap member for the transmission of a torque, wherein an electronic control device picks up and monitors speed signals of the primary pulley and secondary pulley and controls actuators for adjusting the effective diameters of primary pulley and/or secondary pulley and hence the speed ratio of the CVT as a function of these speeds and of at least the position of an accelerator pedal, **characterised by** the following steps:
- in case of a change of the accelerator pedal position, it is checked whether this change is within a value (a) relevant to the road behaviour or above (1), wherein only in case of a value above is there at the same time in the usual manner overriding of the adjustment of the speed ratio of the CVT in the form of a change of speed ratio (4),
- if it is detected that the change of accelerator pedal position is below a value (a) relevant to the dynamics of vehicle movement, it is checked whether the driving speed (S) changes beyond a calibrated range by the current driving speed or remains within this calibrated range (S1<S<S2), whereon only on detection of a change of driving speed out of the calibrated range (S1<S<S2) is there immediately in the usual manner overriding of the adjustment of the speed ratio in the form of a change of speed ratio (4) of the CVT;
- if it is detected that the change of driving speed remains within the calibrated range (S1<S<S2), there is no overriding of the adjustment of the CVT in the form of a change of speed ratio, but the existing speed ratio remains constant (3).

2. Method according to claim 1, **characterised in that** the calibrated range (S1<S<S2) varies, depending on the current driving speed (S).

3. Method according to claims 1 and 2, **characterised in that** the calibrated range (S1<S<S2) increases with increasing driving speed (S).
